# EUROPÄISCHE PATENTSCHRIFT

(11) **EP 2 382 944 B1**
(45) Veröffentlichungstag und Bekanntmachung des Hinweises auf die Patenterteilung: **11.06.2014**
(21) Anmeldenummer: 10161640.7
(22) Anmeldetag: 30.04.2010
(51) Int. Cl.: A61C 13/20, F27B 17/02

(54) **Dentalofen**
Dental oven
Four dentaire

(43) Veröffentlichungstag der Anmeldung: 02.11.2011
(73) Patentinhaber: Ivoclar Vivadent AG, 9494 Schaan (LI)
(72) Erfinder: Rohner, Gottfried, 9450 Altstätten (CH); Jussel, Rudolf, 6805 Feldkirch-Gisingen (AT)
(74) Vertreter: Baronetzky, Klaus

(56) Entgegenhaltungen:
- EP-A1- 2 105 691
- DE-A1- 4 308 244
- DE-A1-102006 032 655

## Beschreibung

Die Erfindung betrifft einen Dentalofen, gemäß dem Oberbegriff von Anspruch 1.

Aus der DE 26 32 846 C3 ist ein Dentalofen bekannt, bei dem eine haubenförmige Brennkammer einen Boden aufweist, der als Brenngutsockel ausgebildet ist. Der Brenngutsockel Ist etwa in gleicher Höhe mit den umgebenden Flächen angeordnet, was die Handhabung wesentlich vereinfacht.

Derartige Dentalöfen haben sich über Jahrzehnte hinweg bewährt.

Ein ähnlicher Dentalofen ist beispielsweise aus der DE 199 05 666 A1 bekannt. Bei diesem Dentalofen besteht ebenfalls eine haubenförmiger Brennkammer, die gegenüber einer Brennplattform vertikal verfahrbar ist. Die Brennplattform ist auf einer Isolationsplatte abgestützt und soll ihrerseits über eine Vertiefung das Dentalrestaurationsteil aufnehmen.

Für das Brennen dentaler Keramiken ist es ausgesprochen wichtig, dass ein genaues Temperaturprofil während des Brennvorgangs eingehalten wird. Ein derartiges Temperaturprofil wird durch eine geregelte Beheizung über eine oder mehrere Heizspiralen sicher gestellt, wobei ein Temperatursensor oder mehrere Temperatursensoren für die Regelung der Innenraumtemperatur der Brennkammer bestimmt sind. Aus Kostengründen ist es wünschenswert, die Anzahl der Temperatursensoren zu begrenzen, insbesondere bei Vakuum-Dentalbrennöfen, da die Durchführungen stets in besonderer Weise abgedichtet werden müssen.

Typischerweise werden die Dentalrestaurationsteile zentral in die Brennkammer eingestellt. Häufig erfolgt das Einbringen jedoch nicht exakt in der Mitte, oder es werden mehrere Dentalrestaurationsteile gleichzeitig gebrannt, um die Effizienz des Brennvorgangs insofern deutlich zu erhöhen.

Um dennoch eine vorgegebene und gleichförmige Temperatur in dem Brennofen sicher zu stellen, ist es üblich, die Aufnahme für die Dentalrestauratonsteile, beispielsweise den Brenngutsockel gemäß der vorstehend genannten DE 26 32 846 C3 mit guter Wärmeleitfähigkeit und massiv herzustellen, wie es beispielsweise auch bei dem Brennofen gemäß der DE 195 42 984 C1 vorgesehen ist.

EP-A-2 105 691 beschreibt einen Dentalofen mit einer Brennkammer, die einen Boden sowie mindestens eine Aufnahme für dentale Restaurationsteile aufweist. Die Aufnahme weist eine Mehrzahl insbesondere gleich dicker kugelförmiger Tragelemente auf, von denen wenigstens einige gemeinsam eine Auflageebene für das Dentalrestaurationsteil bilden.

Zur Abkürzung des Brennzyklus ist es bekannt geworden, die Abkühlung durch Öffnen der Haube des Dentalofens zu beschleunigen. Hierdurch entsteht dann häufig ein Temperaturgradient in der Aufnahme, die auch zum Brechen der Aufnahme führen kann.

Demgegenüber liegt der Erfindung die Aufgabe zugrunde, einen Dentalofen gemäß dem Oberbegriff von Anspruch 1 zu schaffen, der hinsichtlich der Dauerhaltbarkeit verbessert ist, ohne dass die exakte Realisierung von gewünschten Temperaturprofilen innerhalb der gesamten Brennkammer beeinträchtigt wäre.

Diese Aufgabe wird erfindungsgemäß durch Anspruch 1 gelöst. Vorteilhafte Weiterbildungen ergeben sich aus den abhängigen Ansprüchen.

Erfindungsgemäß ist es vorgesehen, die Aufnahme mit einer Vielzahl von Tragelementen auszugestalten, die nebeneinander angeordnet sind, beilspielsweise in Form einer Matrix. Überraschend brechen die Tragelemente auch dann nicht, wenn sie sehr dünn sind, beispielsweise 3 - 5 mm, solange der Durchmesser der Tragelemente signifikant kleiner als der Durchmesser der Brennkammer ist, so dass beispielsweise mehr als 10 Tragelemente den Boden der Brennkammer bedecken können.

Besonders bevorzugt ist es, wenn die Tragelemente eine gute Wärmeleitfähigkeit aufweisen. Überraschend stellt dies auch eine gleichförmige Temperatur innerhalb der Brennkammer sicher, solange der Brennofen nicht geöffnet ist. Die Tragelemente leiten offenbar durch Anlage aneinander die Wärme gut weiter, und auch der Brennkammerboden erlaubt eine Vergleichmäßigung des Temperaturprofils.

Gleichzeitig schützen die Tragelemente den Brennkammerboden, und überraschend ergaben sich bei Versuchen überhaupt keine Beeinträchtigungen durch Risse, auch wenn die Haube des Dentalofens geöffnet wurde, was vermutlich auf die Absenkung und damit den besseren Schutz des Brennkammerbodens zurückzuführen ist.

Erfindungsgemäß ist es besonders günstig, dass eine Mehrpunktauflage für das Restaurationsteil bereitgestellt wird. Etwaige nicht-ebene Oberseiten der Dentalrestaurationsteile werden so kompensiert, und die Neigung des Dentalrestaurationsteils mit nicht-planer Unterseite zu einer geringfügigen Kippbewegung ist deutlich geringer, so dass auch die Gefahr von unerwünschten Erschütterungen reduziert ist.

In besonders günstiger Ausgestaltung der Erfindung ist es vorgesehen, dass die im Wesentlichen scheibenförmigen Tragelemente dem Brennkammerboden in maximaler Flächenfüllung - also soweit wie möglich - bedecken. Wenn runde Scheiben verwendet werden, versteht es sich, dass Zwischenräume verbleiben, auch wenn die Scheiben in dichter Packung aneinander gelegt werden.

Wenn eine vollständige Abdeckung des Brennraumkammerbodens mit runden Scheiben erwünscht ist, ist es auch möglich, eine zweite Schicht von Tragelementen zu verwenden, die versetzt gegenüber der ersten Schicht auf diese aufgelegt ist, so dass die verbleibenden Lücken der ersten Schicht abgedeckt sind.

Es ist auch möglich, anstelle von runden Scheiben eine beliebige andere Form der Tragelemente zu verwenden, beispielsweise dreieckförmige, sechseckförmige, quadratische, nicht-quadratisch-rechteckige oder beispielsweise kreuzförmige Tragelemente.

Insbesondere kreuzförmige Tragelemente können auch formflüssig zueinander gelegt werden, so dass sie den Brennkammerboden im Bereich der Auflage für das Brenngut lückenfrei ausfüllen und miteinander formschlüssig verbunden sind.

In besonders günstiger Ausgestaltung ist es vorgesehen, dass die Tragelemente in der Draufsicht eine geometrische Form aufweisen, wobei die geometrischen Formen einander benachbarter Tragelemente gleich ist.

In besonders günstiger Ausgestaltung ist es vorgesehen, dass wenigstens ein Teil der Oberfläche der Tragelemente mit einer Struktur versehen ist um eine mehrpunktförmige, mehrlinienförmige- oder mehrflächenförmige Auflageebene zu schaffen.

In besonders günstiger Ausgestaltung ist es vorgesehen, dass die Tragelemente in der Draufsicht die gleiche geometrische Form aufweisen, und insbesondere zueinander passend sind.

In besonders günstiger Ausgestaltung ist es vorgesehen, dass jedes Tragelement eine Breite und/oder Länge aufweist, die mehr als das Doppelte seiner Höhe beträgt, insbesondere etwa das Fünffache.

In besonders günstiger Ausgestaltung ist es vorgesehen, dass die Tragelemente auf dem Boden der Brennkammer des Dentalofens in dichter Packung, ggf. unter Belassung von Schlitzen und/oder Lücken und insbesondere unter Belassen eines Randabstands zu den Wänden der Brennkammer hin, angeordnet sind.

In besonders günstiger Ausgestaltung ist es vorgesehen, dass dass einander benachbarte Tragelemente mindestens teilweise aneinander anliegen, und dass äußere Tragelemente mit einem Spiel oder Randabstand zu den Wänden der Brennkammer des Dentalofens angeordnet sind, das mindestens der Differenz zwischen dem aufsummierten Dehnungsweg der Tragelemente bei Erwärmung von Raumtemperatur auf max. 1800°C und dem Dehnungsweg des Bodens der Brennkammer bei Erwärmung von Raumtemperatur auf max. 1800°C entspricht.

In besonders günstiger Ausgestaltung ist es vorgesehen, dass dass die Tragelemente scheibenförmig ausgebildet sind und insbesondere wenigstens teilweise aus Al₂O₃ und/oder SiNi und/oder Mulit und/oder Cordierit und/oder AIN und/oder AlTi und/oder SiC und/oder SiO₂ und/oder MgO und/oder Porzellan gebildet sind.

In besonders günstiger Ausgestaltung ist es vorgesehen, dass die Tragelemente in einer Mehrfachanordnung von mindestens zwei Tragelementen auf den Boden des Dentalofens verteilt angeordnet sind.

In besonders günstiger Ausgestaltung ist es vorgesehen, dass jedes Tragelement eine punktsymmetrische Form, wie einen Kreis, ein Quadrat, ein Sechseck, ein Kreuz oder einen Stern aufweist.

In besonders günstiger Ausgestaltung ist es vorgesehen, dass wenigstens ein Tragelement eine runde oder eine von der kreisrunden Form abweichende Außenkontur aufweist.

In besonders günstiger Ausgestaltung ist es vorgesehen, dass die Tragelemente scheibenförmig aus einem massiven und ungeschäumten Material, insbesondere aus einer Keramik besteht, an deren Erweichungstemperatur höher als die maximale Betriebstemperatur des Dentalofens ist.

In besonders günstiger Ausgestaltung ist es vorgesehen, dass wenigstens zwei Tragelemente formschlüssig ineinander greifen.

In besonders günstiger Ausgestaltung ist es vorgesehen, dass die Aufnahme wenigstens zwei übereinander angeordnete Schichten von nebeneinander angeordneten Tragelementen aufweist.

In besonders günstiger Ausgestaltung ist es vorgesehen, dass die Tragelemente unterschiedliche Höhen aufweisen, jedoch mindestens hinsichtlich ihrer obersten Schicht - soweit mehrere Schichten übereinander angeordnet sind - auf der gleichen Ebene enden.

In besonders günstiger Ausgestaltung ist es vorgesehen, dass zwischen dem Boden des Dentalofens und der Aufnahme eine wenigstens einteilige Scheibe mit einer hohen Wärmeleitfähigkeit angeordnet ist.

In besonders günstiger Ausgestaltung ist es vorgesehen, dass die Scheibe aus SiC gebildet ist.

In besonders günstiger Ausgestaltung ist es vorgesehen, dass die Tragelemente auf Ihrer Oberseite im Wesentlichen flach, ggf. mit zu ihren Rändern leicht abfallender Form, ausgebildet sind und eine Mehrpunkt- oder Mehrflächenauflage für dentale Restaurationsteile bilden.

In besonders günstiger Ausgestaltung ist es vorgesehen, dass die Tragelemente auf dem Brennkammerboden aufgelegt sind, welcher eine größere Wärmeleitfähigkeit als das Wärmedämmmaterial des Dentalofens aufweist und insbesondere die Tragelemente formschlüssig aufnimmt, die insbesondere aus SiC gebildet ist.

Weitere Vorteile und Einzelheiten und Merkmale ergeben sich aus der nachfolgenden Beschreibung mehrerer Ausführungsbeispiele der Erfindung anhand der Zeichnungen.

Es zeigen:
- Fig. 1: eine schematische Ansicht eines erfindungsgemäßen Dentalofens in einer Ausführungsform;
- Fig. 2: eine vergrößerte Ansicht eines Details aus Fig. 1;
- Fig. 3: eine Draufsicht auf ein Detail eines erfindungsgemäßen Dentalofens, unter Darstellung von Tragelementen und Brennkammerboden;
- Fig. 4: eine modifizierte Ausführungsform eines erfindungsgemäßen Dentalofens, in der Darstellung gemäß Fig. 3;
- Fig. 5: eine modifizierte Ausführungsform eines erfindungsgemäßen Dentalofens, in der Darstellung gemäß Fig. 3;
- Fig. 6: eine modifizierte Ausführungsform eines erfindungsgemäßen Dentalofens, in der Darstellung gemäß Fig. 3;
- Fig. 7: eine modifizierte Ausführungsform eines erfindungsgemäßen Dentalofens, in der Darstellung gemäß Fig. 3;
- Fig. 8: eine modifizierte Ausführungsform eines erfindungsgemäßen Dentalofens, in der Darstellung gemäß Fig. 3;
- Fig. 9: eine modifizierte Ausführungsform eines erfindungsgemäßen Dentalofens, in der Darstellung gemäß Fig. 3; und
- Fig. 10: eine modifizierte Ausführungsform eines erfindungsgemäßen Dentalofens, in der Darstellung gemäß Fig. 3.

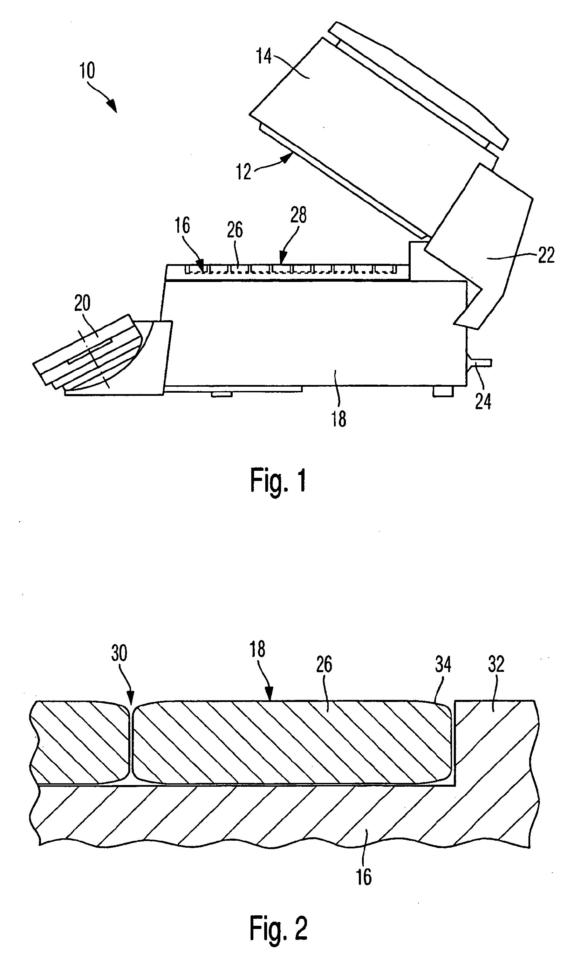

Der in Fig. 1 dargestellte Dentalofen 10 weist eine Brennkammer 12 auf, die an Ihren Seitenwänden und Ihrer Deckenwand über eine Haube 14 gebildet ist. Der Boden 16 der Brennkammer 12 ist über ein Unterteil 18 des Dentalofens 10 gebildet. In an sich bekannter Weise weist der Dentalofen 10 ein Bedienpult 20 auf, und das Unterteil 18 und das haubenförmige Oberteil 14 sind übe ein Gelenk 22 miteinander verbunden.

In dem dargestellten Ausführungsbeispiel weist der Dentalofen 10 einen Unterdruckanschluss 24 auf, über welchen die Brennkammer 12 bei geschlossener Haube 14 unter Unterdruck setzbar ist.

Erfindungsgemäß ist der Brennkammerboden 16 von Tragelementen 26 bedeckt, deren Ausgestaltung besser aus Fig. 2 ersichtlich ist. Hierzu weist das Unterteil 18 im Bereich des Brennkammerbodens 16 eine Vertiefung 28 auf, die in Ihrer Höhe genau der Höhe eines Tragelements 26 entspricht.

Wie aus Fig. 2 ersichtlich ist, sind die Tragelemente 26 so ausgebildet und angeordnet, dass sie die Vertiefung 28 praktisch vollständig ausfüllen. Die Tragelemente 26 können in beliebiger geeigneter Weise ausgebildet sein, sind jedoch jedenfalls temperaturfest bis deutlich oberhalb der Nenntemperatur des Brennofens beispielsweise 1600°C. Sie können vollständig oder teilweise aus Al₂O₃ bestehen. Wenn der Wärmerausdehnungkoofizient des Brennkammerbodens 16 und der Wärmeausdehnungskoofizient der Tragelemente 26 unterschiedlich ist, lässt sich dies leicht durch das Spiel 30 zwischen den Tragelementen 26 und dem Rand 32 der Vertiefung 18 kompensieren.

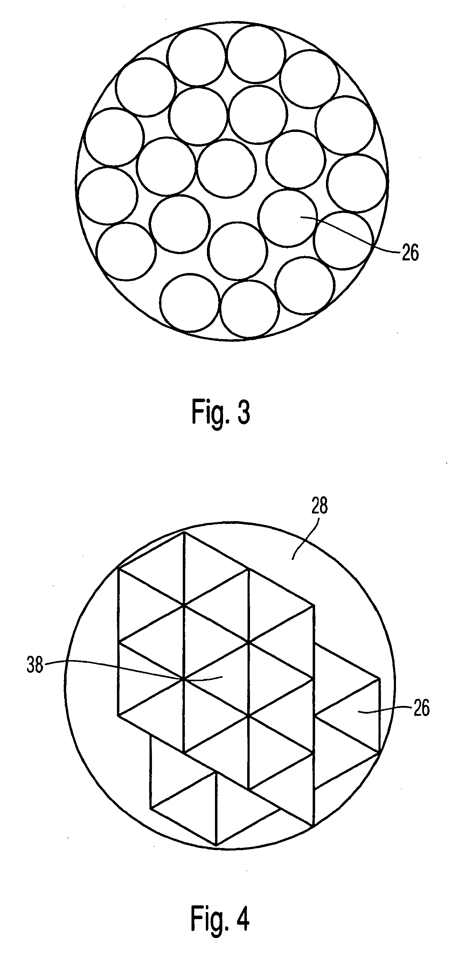

Es versteht sich, dass erfindungsgemäß die Anordnung, Anzahl und Formgebung der Tragelemente 26 in weiten Bereichen an die Erfordernisse anpassbar sind. Beispiele hierfür sind aus den Figuren 3 bis 10 ersichtlich. So zeigt Fig. 3 kreisförmige, also scheibenförmige Tragelemente 26, die im Wesentlichen flachzylindrisch sein können oder balllige Abrundungen 34 an ihren Rändern aufweisen können, wie es aus Fig. 2 ersichtlich ist.

Aus Fig. 4 ist die Mehrfachanordnung von dreiecksförmigen Anordnungen von Tragelementen 26 ersichtlich. Bei dieser Ausgestaltung ist es günstig, dass schwerpunktmäßig der zentrale Bereich 38 der Tragelementanordnung lückenlos bedeckt ist, während randseitig der Tragelementanordnung Freiflächen entstehen, also der Boden 18 der Brennkammer freiliegt.

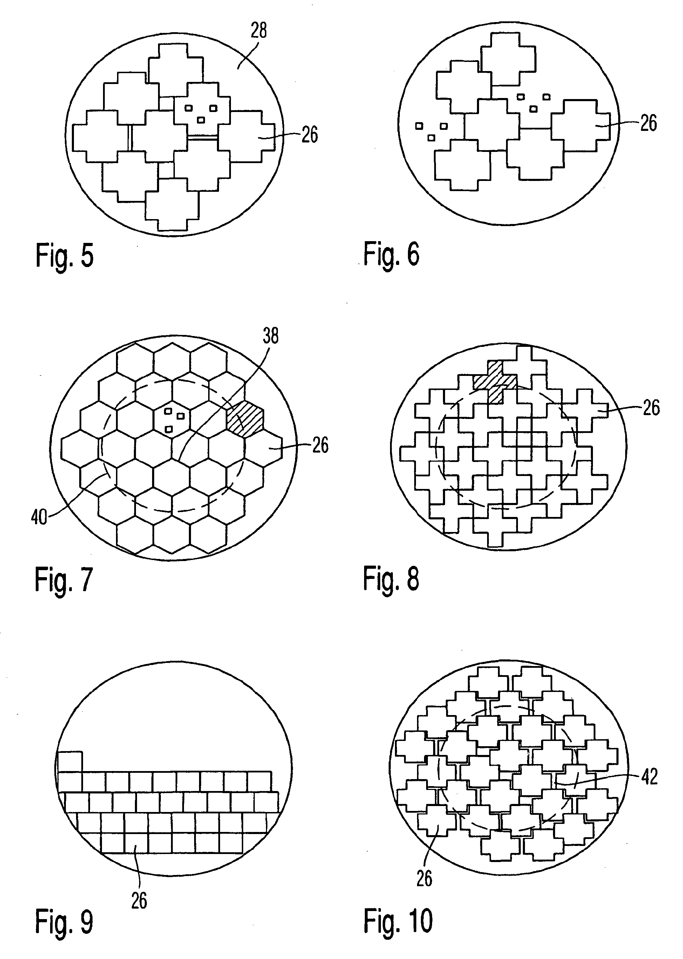

Aus Fig. 5 sind kreuzförmige Tragelemente 26 ersichtlich, die gemäß Fig. 6 auch noch lockerer aufgelegt sein können, jedoch teilweise gleichsam ineinander verhakt sind, so dass sie gemeinsam verschiebbar oder verdrehbar sind.

Gemäß Fig. 7 ist eine sechseckförmige Ausgestaltung der Tragelemente 26 vorgesehen, die randseitig deutliche Bereiche 38 des Brennkammerbodens 16 freilässt aber im zentralen Bereich 38 den Brennkammerboden vollständig bedeckt.

Ebenfalls kreuzförmige Tragelemente 26 sind aus Fig. 8 ersichtlich. Bei diesen Tragelementen sind die Kreuzschenkel länger und dünner, so dass sich insgesamt schlankere Kreuze als bei der Ausführungsform gemäß Fig. 5 und 6 ergeben.

Wie aus Fig. 7 und 8 ersichtlich ist, lassen sich dentale Restaurationsteile 40, die dort gestrichelt als schematischer Kreis dargestellt sind, zentral in der Brennkammer anordnen. Beispielsweise kann das dentale Restaurationsteil 40 auch in einer Gipsmuffel oder ähnlichem aufgenommen und abgestützt sein.

Durch die enge Verzahnung, gerade bei den Ausführungsformen gemäß den Fig. 5 bis 10, ergibt sich auch ein guter Wärmeübergang zwischen den scheibenförmigen Tragelementen 26, der für die Vergleichmäßigung der Temperatur in der Brennkammer sorgt.

Aus Fig. 9 ist ersichtlich, dass der Brennkammerboden auch teilweise bedeckt sein kann, beispielsweise mit quadratischen Tragelementen 26.

Eine weitere Ausführungsform der erfindungsgemäßen Tragelemente ist aus Fig. 10 ersichtlich. Bei dieser Ausgestaltung sind kreuzförmige Tragelemente 26 unter Belassung von Lücken 42 miteinander formschlüssig verbunden.

## Patentansprüche

1. Dentalofen, mit einer Brennkammer (12), die einen Boden (16) sowie mindestens eine Aufnahme für dentale Restaurationsteile aufweist, wobei die Aufnahme eine Mehrzahl, insbesondere gleich dicker, Trageelemente (26) aufweist, und wobei wenigstens einige der Trageelemente (26) gemeinsam eine Auflageebene für die dentalen Restaurationsteile bilden, **dadurch gekennzeichnet, dass** jedes Tragelement (26) eine im Wesentlichen plane Oberfläche aufweist.

2. Dentatofen nach Anspruch 1, **dadurch gekennzeichnet, dass** wenigstens ein Teil der Oberfläche der Tragelemente (26) mit einer Struktur versehen ist, um eine mehrpunktförmige, mehrlinienförmige- oder mehrflächenförmige Auflageebene zu schaffen.

3. Dentalofen nach einem der vorhergehenden Ansprüche, **dadurch gekennzeichnet, dass** die Tragelemente (26) in der Draufsicht die gleiche geometrische Form aufweisen, und insbesondere zueinander passend sind.

4. Dentalofen nach einem der vorhergehenden Ansprüche, **dadurch gekennzeichnet, dass** jedes Tragelement (26) eine Breite und/oder Länge aufweist, die mehr als das Doppelte seiner Höhe beträgt, insbesondere etwa das Fünffache.

5. Dentalofen nach einem der vorhergehenden Ansprüche, **dadurch gekennzeichnet, dass** die Tragelemente (26) auf dem Boden (16) der Brennkammer (12) des Dentalofens (10) in dichter Packung, ggf. unter Belassung von Schlitzen und/oder Lücken und insbesondere unter Belassen eines Randabstands zu den Wänden der Brennkammer (12) hin, angeordnet sind.

6. Dentalofen nach einem der vorhergehenden Ansprüche, **dadurch gekennzeichnet, dass** einander benachbarte Tragelemente (26) mindestens teilweise aneinander anliegen, und dass äußere Tragelemente (26) mit einem Spiel (30) oder Randabstand zu den Wänden der Brennkammer (12) des Dentalofens (10) angeordnet sind, das mindestens der Differenz zwischen dem aufsummierten Dehnungsweg der Tragelemente (26) bei Erwärmung von Raumtemperatur auf max. 1800°C und dem Dehnungsweg des Bodens (16) der Brennkammer (12) bei Erwärmung von Raumtemperatur auf max. 1800°C entspricht.

7. Dentalofen nach einem der vorhergehenden Ansprüche, **dadurch gekennzeichnet, dass** die Tragelemente (26) scheibenförmig ausgebildet sind und insbesondere wenigstens teilweise aus Al₂O₃ und/oder SiNi und/oder Mullt und/oder Cordierit und/oder AlN und/oder AlTi und/oder SiC und/oder SiO₂ und/oder MgO und/oder Porzellan gebildet sind.

8. Dentalofen nach einem der vorhergehenden Ansprüche, **dadurch gekennzeichnet, dass** die Tragelemente (26) in einer Mehrfachanordnung von mindestens zwei Tragelementen (26) auf den Boden (16) des Dentalofens (10) verteilt angeordnet sind.

9. Dentalofen nach einem der vorhergehenden Ansprüche, **dadurch gekennzeichnet, dass** wenigstens ein Tragelement (26) eine runde oder eine von der kreisrunden Form abweichende Außenkontur aufweist.

10. Dentalofen nach einem der vorhergehenden Ansprüche, **dadurch gekennzeichnet, dass** wenigstens zwei Tragelemente (26) formschlüssig ineinander greifen.

11. Dentalofen nach einem der vorhergehenden Ansprüche, **dadurch gekennzeichnet, dass** die Aufnahme wenigstens zwei übereinander angeordnete Schichten von nebeneinander angeordneten Tragelementen aufweist.

12. Dentalofen nach einem der vorhergehenden Ansprüche, **dadurch gekennzeichnet, dass** die Tragelemente (26) unterschiedliche Höhen aufweisen, jedoch mindestens hinsichtlich ihrer obersten Schicht - soweit mehrere Schichten übereinander angeordnet sind - auf der gleichen Ebene enden.

## Claims

1. A dental furnace with a firing chamber (12) comprising a base (16) and at least one receiving section for dental restoration parts, wherein the receiving section comprises a plurality of support elements (26) that in particular have the same thickness, and wherein at least some of said support elements (26) form a common support plane for the dental restoration parts, **characterized in that** each support element (26) has a substantially plane surface.

2. The dental furnace as claimed in claim 1, **characterized in that** at least a part of the surface of the support elements (26) Is provided with a structure for creating a multi-point, multi-line or multi area support plane

3. The dental furnace as claimed in one of the preceding claims, **characterized in that** the support elements (26) In the top view have the same geometric shape, and in particular fit together

4. The dental furnace as claimed in one of the preceding claims, **characterized in that** each support element (26) has a width and/or length that amounts to more than twice its height, in particular approximately to five times its height.

5. The dental furnace as claimed in one of the preceding claims, **characterized in that** the support elements (26) are arranged in close packing on the base (16) of the fmng chamber (12) of the dental furnace (10), if applicable leaving slots and/or gaps, and in partlcular leaving an edge distance to the walls of the firing chamber (12)

6. The dental furnace as claimed in one of the preceding claims, **characterized in that** the support elements (26) adjacent to one another at least partially abut against each other, and **in that** outer support elements (26) are arranged with a clearance (30) or edge distance to the walls of the firing chamber (12) of the dental furnace (10), said clearance or edge distance at least corresponding to the difference between the added expansion path of the support elements (26) upon heating from room temperature to a maximum of 1800°C, and the expansion path of the base (16) of the firing chamber (12) upon heating from room temperature to a maximum of 1800°C

7. The dental furnace as claimed In one of the preceding claims, charactenzed in that the support elements (26) are formed in a disc-like manner and in particular are at least partially formed of Al₂O₃ and/or SiNi and/or Mulit and/or Cordierit and/or AlN and/or AlTi and/ or SiC and/or SiO₂ and/or MgO and/or porcelain.

8. The dental furnace as claimed in one of the preceding claims, **characterized In that** the support elements (26) are arranged In a multiple arrangement consisting of at least two support elements (26) on the base (16) of the dental furnace (10) in a distributed manner.

9. The dental furnace as claimed in one of the preceding claims, **characterized In that** at least one support element (26) comprises a round shape or an outer shape that deviates from the circular shape.

10. The dental furnace as claimed In one of the preceding claims, characterized is that at least two support elements (26) engage positively one into the other.

11. The dental furnace as claimed in one of the preceding claims, charactenzed In that the receiving section comprises at least two layers of adjacent support elements, said layers being arranged one above the other

12. The dental furnace as claimed In one of the preceding claims, **characterized in that** the support elements (26) are differing in height, but end on the same plane at least with respect to the top layers thereof, In case several layers are arranged on top of each other

## Revendications

1. Four dentaire, comportant une chambre de combustion (12) qui présente un corps (16) et au moins un réceptacle pour des pièces de restauration dentaire, dans lequel le réceptacle présente une multiplicité d'éléments de support (26), en particulier de même épaisseur, et dans lequel au moins quelques-uns des éléments de support (26) forment conjointement un plan de support pour les pièces de restauration dentaire, **caractérisé en ce que** chaque élément de support (26) présente une surface essentiellement plane.

2. Four dentaire selon la revendication 1, **caractérisé en ce qu'**au moins une partie de la surface des éléments de support (26) est dotée d'une structure pour créer un plan de support à plusieurs points, à plusieurs lignes ou à plusieurs surfaces.

3. Four dentaire selon l'une des revendications précédentes, **caractérisé en ce que** les éléments de support (26) présentent la même forme géométrique, dans la vue du dessus, et en particulier sont adaptés les uns aux autres.

4. Four dentaire selon l'une des revendications précédentes, **caractérisé en ce que** chaque élément de support (26) présente une largeur et/ou une longueur qui est de plus du double de sa hauteur, en particulier, à peu près cinq fois sa hauteur.

5. Four dentaire selon l'une des revendications précédentes, **caractérisé en ce que** les éléments de support (26) sont disposés sur le fond (16) de la chambre de combustion (12) du four dentaire (10) de façon fortement compacte, éventuellement en laissant des fentes et/ou des espaces et en particulier en laissant une distance marginale par rapport aux parois de la chambre de combustion (12).

6. Four dentaire selon l'une des revendications précédentes, **caractérisé en ce que** des éléments de support (26) voisins les uns des autres sont adjacents au moins partiellement et **en ce que** des éléments de support externes (26) sont disposés avec un jeu (30) ou une distance marginale par rapport aux parois de la chambre de combustion (12) du four dentaire (10), que correspond à au moins la différence entre la course de dilatation totale des éléments de support (26) lors du chauffage à partir de la température ambiante jusqu'à 1800 °C au maximum et la course de dilatation du fond (16) de la chambre de combustion (12) lors du chauffage à partir de la température ambiante jusqu'à 1800 °C au maximum.

7. Four dentaire selon l'une des revendications précédentes, **caractérisé en ce que** les éléments de support (26) sont en forme de disque et en particulier sont formés au moins partiellement en Al₂O₃ et/ou en SiNi et/ou en mullite et/ou en cordiérite et/ou en AIN et/ou en AlTi et/ou en SiC et/ou en SiO₂ et/ou en MgO et/ou en porcelaine

8. Four dentaire selon l'une des revendications précédentes, **caractérisé en ce que** les éléments de support (26) sont disposées répartis en une disposition multiple d'au moins deux éléments de support (26) sur le fond (16) du four dentaire (10)

9. Four dentaire selon l'une des revendications précédentes, **caractérisé en ce qu'**au moins un élément de support (26) présente un contour extérieur arrondi ou s'éloignant de la forme circulaire.

10. Four dentaire selon l'une des revendications précédentes, **caractérisé en ce qu'**au moins deux éléments de support (26) s'imbriquent l'un dans l'autre de façon solidaire.

11. Four dentaire selon l'une des revendications précédentes, **caractérisé en ce que** le réceptacle présente au moins deux couches disposées l'une sur l'autre d'éléments de support disposés les uns à côté des autres.

12. Four dentaire selon l'une des revendications précédentes, **caractérisé en ce que** les éléments de support (26) présentent des hauteurs différentes mais se terminant sur le même plan, au moins pour ce qui concerne leur couche supérieure, dans la mesure où plusieurs couches sont disposées l'une sur l'autre.
